# EUROPÄISCHE PATENTSCHRIFT

(11) **EP 0 325 757 B1**
(45) Veröffentlichungstag und Bekanntmachung des Hinweises auf die Patenterteilung: **08.06.1994**
(21) Anmeldenummer: 88120972.0
(22) Anmeldetag: 15.12.1988
(51) Int. Cl.: H01H 13/70

(54) **Tastatur für preisrechnende, einen Abrufspeicher aufweisende Ladenwaagen**
Keyboard for price calculating shop scales comprising a memory
Clavier pour balance de magasin, calculant des prix et comprenant une mémoire

(30) Priorität: 29.01.1988 DE 3802660
(43) Veröffentlichungstag der Anmeldung: 02.08.1989
(73) Patentinhaber: Bizerba-Werke Wilhelm Kraut GmbH & Co. KG., D-72336 Balingen (DE)
(72) Erfinder: Jung, Peter, Dr. Ing., 7460 Balingen (DE); Purr, Horst, Ing. (grad.), 7741 Tennenbronn (DE); Betz, Immanuel, Ing. (grad.), 7460 Balingen 14 (DE)
(74) Vertreter: Hoeger, Stellrecht & Partner

(56) Entgegenhaltungen:
- DE-A- 2 723 736
- DE-A- 2 753 097
- DE-A- 3 110 863
- DE-A- 3 345 372
- US-A- 4 559 427

## Beschreibung

Die Erfindung betrifft eine Tastatur für preisrechnende, einen Abrufspeicher aufweisende Ladenwaage mit einem ortsfesten, aus mehreren Einzeltasten bestehenden Tastenfeld, wobei am ortsfesten Tastenfeld abnehmbar ein beweglicher Rahmen mit mehreren Betätigungselementen angeordnet ist, die Betätigungselemente mit an den Einzeltasten angreifenden Nocken versehen sind, und die Betätigungselemente des Rahmens mit den Einzeltasten des Tastenfeldes so ausgerichtet sind, daß jeweils ein Betätigungselement über wenigstens einer Einzeltaste liegt und diese Einzeltaste durch das Betätigungselement betätigbar ist.

Eine derartige Tastatur ist aus DE-A-33 45 372 bekannt. Solche Waagen wurden bisher meistens im "Bedienungsbetrieb" eingesetzt, d.h. eine in einem Laden beschäftigte Bedienungsperson legt die von einem Kunden gewünschte Ware auf die Waagschale der Waage und tippt an der Tastatur den im Abrufspeicher gespeicherten Grundpreis (Preis pro Gewichtseinheit) der Ware ein, worauf das elektronische Rechenwerk der Waage unter Berücksichtigung des Warengewichtes den Preis der Ware errechnet, anzeigt und auf einem Etikett oder Bon ausdruckt.

Neuerdings hat es sich in Ladengeschäften eingebürgert, derartige preisrechnende Ladenwaagen mit Abrufspeicher auch im "Selbstbedienungsbetrieb" einzusetzen, d.h. der Kunde legt die gewünschte Ware selbst auf die Waagschale und tippt den Grundpreis ein. Während jedoch eine Bedienungsperson den Grundpreis ziffernmäßig, d.h. durch Betätigung einer oder mehrerer, mit Ziffern versehener Einzeltasten eintippt, sind bei Selbstbedienung durch den Kunden für den Abruf der Grundpreise besondere, gegenüber den Zifferntasten größer ausgebildete Tasten vorgesehen, auf denen gewöhnlich ein Bild oder die Bezeichnung der Ware (z.B. "Äpfel") angegeben ist. Der Kunde braucht somit den Grundpreis nicht durch Betätigung einer oder mehrerer Einzeltasten ziffernmäßig einzugeben, sondern er ruft diesen Preis durch Betätigung einer einzigen Taste insgesamt ab.

Je nachdem, ob eine Waage im "Bedienverkauf" oder im "Selbstbedienverkauf" eingesetzt wird, werden Waagen mit unterschiedlichen Tastaturen verwendet, nämlich im Bedienverkauf reine Zifferntastaturen und im Selbstbedienverkauf Tastaturen mit Angabe des Bildes oder des Namens der Ware auf den größer ausgebildeten Einzeltasten. Auf diese Weise sind die bekannten Waagen für eine bestimmte Betriebsart festgelegt und können wahlweise nicht in der anderen Betriebsart eingesetzt werden.

Es ist Aufgabe der Erfindung, eine Tastatur für preisrechnende, einen Abrufspeicher aufweisende Ladenwaagen der eingangs genannten Gattung so auszubilden, daß die Waagen wahlweise für Bedien- oder Selbstbedienungsverkauf eingesetzt werden können.

Die Aufgabe wird erfindungsgemäß dadurch gelöst, daß ein Betätigungselement mehrere Einzeltasten des Tastenfeldes überdeckt, und die an diesen Betätigungselementen vorgesehenen Nocken zur Betätigung einer Einzeltaste der unter jedem Betätigungselement liegenden, mehreren Einzeltasten dienen.

Auf diese Weise können die Betätigungselemente im "Selbstbedienverkauf" beliebig groß ausgebildet werden, so daß sie von einem Kunden einfach und sicher gehandhabt werden können.

Aus DE-A-27 23 736 ist eine Tastatur mit Betätigungselementen unterschiedlicher Größe bekannt. Die Größe der Betätigungselemente ist dort jedoch ein für alle Mal festgelegt, und es ist nicht möglich, daß sich ein Betätigungselement über mehrere Einzeltasten erstreckt. Es ist lediglich möglich, ein Abdeckglied für die unterschiedlich großen Betätigungselemente so auszubilden, daß ein Teil dieser Glieder abgedeckt ist und somit nicht benutzt werden kann.

Die nachstehende Beschreibung einer bevorzugten Ausführungsform der Erfindung dient im Zusammenhang mit beiliegender Zeichnung der weiteren Erläuterung. Es zeigen:
- Figur 1: eine herkömmliche Kurzhub-Tastatur mit abnehmbarem, Betätigungselemente aufweisendem Rahmen;
- Figur 2: einen Ausschnitt des Rahmens aus Figur 1 mit einer vergrößerten Darstellung mehrerer Betätigungselemente.
- Figur 3: eine Schnittansicht entlang der Linie 3-3 in Figur 2;
- Figur 4: eine Schnittansicht entlang der Linie 4-4;
- Figur 5: eine schematische Teilschnittansicht einer Kurzhub-Tastatur und
- Figur 6: schematisch eine schaubildliche Ansicht einer preisrechnenden Ladenwaage mit Grundpreis-Speicher.

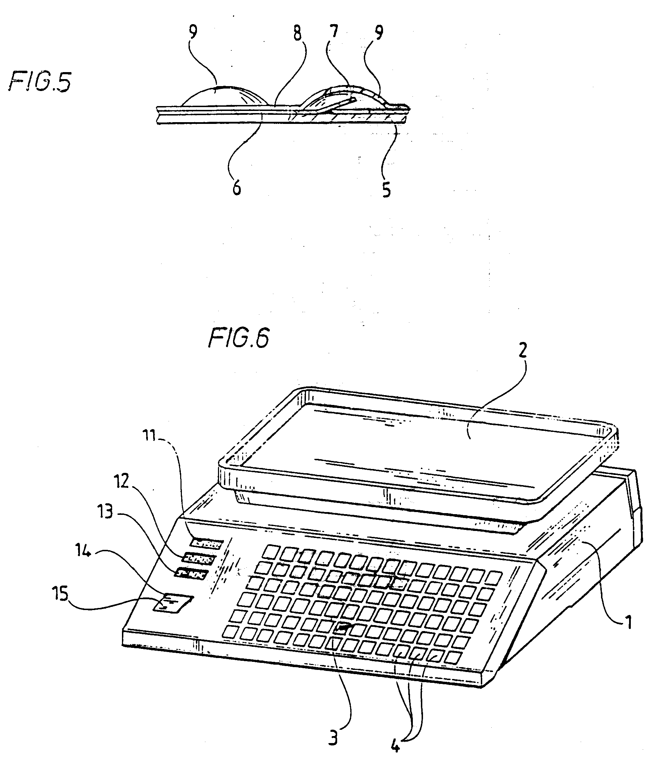

Die in Figur 6 schematisch dargestellte Ladenwaage umfaßt eine auf einem Waagengestell 1 angeordnete Wägeplatte 2 zur Aufnahme eines Wägegutes. An der schrägverlaufenden Vorderseite des Waagengestells 1 ist ortsfest ein Tastenfeld 3 mit zahlreichen, beispielsweise 84, Einzeltasten 4 angeordnet. Das Tastenfeld 3 ist vorzugsweise als Kurzhub-Tastatur ausgebildet, beispielsweise als Folientastatur, wobei die Tasten zu ihrer Betätigung nur über einen kurzen Weg eingedrückt werden müssen und anschliessend zurückfedern. Die Figur 5 zeigt schematisch eine für das Tatenfeld 3 geeignete Kurzhub-Folientastatur an sich bekannter Art. Über einer Schalterplatte 5 mit aufgedruckten Leitern ist eine Schaltfolie 6 mit elastisch zurückfedernden Schaltzungen 7 angeordnet. Über der Schaltfolie 6 liegt eine Schaltdomfolie 8 mit kleinen hochgewölbten Kuppeln 9 aus elastischem Material, welche die einzelnen Tasten 4 des Tastenfeldes 3 in Figur 6 bilden. Die Einzeltasten 4 (bzw. 9) können mit gegebenfalls auswechselbaren Beschriftungen versehen sein, gewöhnlich Ziffern und Zahlen oder anderen Funktionssymbolen. Der größte Teil der Einzeltasten 4 ist mit fortlaufenden Zahlen beschriftet und dient dem Abruf entsprechender Waren-Grundpreis aus einem Abrufspeicher, der im Waagengestell 1 oder als Zentralspeicher räumlich getrennt vom Waagengestell 1 angeordnet sein kann. Eine gewöhnliche kleinere Anzahl der Einzeltasten 4 trägt Ziffern und andere Symbole und dient in erster Linie der Programmierung der den einzelnen Grundpreisen zugeordneten Tasten 4.

Ferner umfaßt die schräg verlaufende Vorderseite des Waagengestells 1 drei Anzeigefelder 11, 12, 13 für das Gewicht einer auf die Wägeplatte 2 aufgelegten Ware, für den Grundpreis dieser Ware bzw. für den zu bezahlenden Gesamtpreis der Ware, der gleich dem Produkt aus dem Gewicht und dem Grundpreis ist und von der dargestellten Waage automatisch berechnet wird. Ferner weist die Waage eine Ausgabeöffnung 14 zur Ausgabe eines bedruckten Bons oder Etiketts 15 auf, auf welches von einem im Waagegestell 1 angeordneten Druckwerk das Gewicht, der Grundpreis und der zu bezahlende Gesamtpreis der Ware aufgedruckt sind.

Die in Figur 6 dargestellte Ladenwaage dient mit ihren zahlreichen, verhältnismäßig kleinen Einzeltasten 4 dem Bedienverkauf und wird von einer Verkäuferin bedient, die z. B. unter anderem die Grundpreise durch Betätigung der Einzeltasten 4 bei jedem Verkauf eintippt. Für einen Selbstbedienverkauf ist die dargestellte Waage nicht geeignet, weil der Kunde die den Einzeltasten 4 zugeordneten Funktionen nicht kennt und diese Tasten zu klein sind, um von Laien störungsfrei betätigt zu werden.

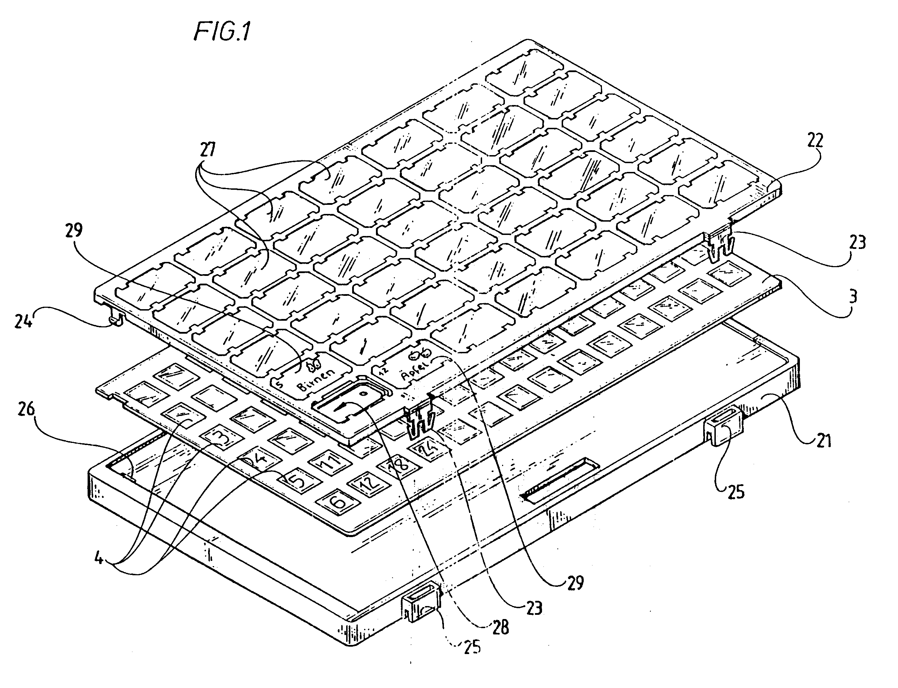

Um das in Figur 6 dargestellte Tastenfeld 3 auch im Selbstbedienverkauf einsetzen zu können, wird es gemäß Figur 1 bis 4 modifiziert. In Figur 1 ist eine fest mit dem Waagengestell 1 verbundene Trägerplatte 21 dargestellt, auf welcher ebenfalls ortsfest das eigentliche Tastenfeld 3 in Gestalt einer kurzhubigen Folientastatur, beispielsweise gemäß Figur 5, angeordnet ist. Das Tastenfeld 3 umfaßt insgesamt 84 Tasten 4, die in bekannter Weise dem Abruf von Grundpreisen bzw. der Einprogrammierung dieser Preise sowie weiteren, hier nicht interessierenden Zwecken dienen. Über dem Tastenfeld 3 wird abnehmbar ein an sich beweglicher Rahmen 22 angeordnet, und zwar dadurch, daß er mit Hilfe von Steckelementen 23 bzw. Rastelementen 24 mit komplementären Steck- bzw. Rastelementen 25 bzw. 26 an der Trägerplatte 21 lösbar verbunden wird. Die Steckelemente 23 können gleichzeitig als Scharniere, insbesondere Filmscharniere, ausgebildet sein, so daß der Rahmen 22 schwenkbar mit den Elementen 23 verbunden ist. Er kann somit nach Lösen der Rastelemente 24, 26 hochgeklappt werden, so daß die darunter liegenden Einzeltasten zugänglich sind. Der Rahmen 22 ist vorzugsweise ein einstückig hergestelltes Kunststoffteil.

Der Rahmen 22 weist insgesamt 42 Einzelfelder 27 auf, die sich jeweils über zwei darunter liegende Einzeltasten 4 des Tastenfeldes 3 erstrecken. In jedem Feld 27 ist ein Betätigungselement 28 in Gestalt einer rückfedernden, zungenartigen Wippe vorgesehen, die im Ruhezustand mit geringem oder ohne Abstand über zwei darunter liegenden Einzeltasten 4 liegt. Wird das Betätigungselement 28 niedergedrückt, so wird eine der darunter liegenden Einzeltasten 4 betätigt und der entsprechende Grundpreis abgerufen.

In jedem Feld 27 ist über dem Betätigungselement 28 ein Schild 29 angeordnet, welches ein Bild, den Namen oder eine Bezifferung derjenigen Ware, z. B. Äpfel, enthält, die der darunter liegenden Einzeltasten 4 aus dem Speicher der Ladenwaage abrufbar zugeordnet ist. Die Schilder 29 können entweder direkt auf den Betätigungselementen 28 oder am Rand der Felder 27 befestigt werden. In letzterem Falle sind die Schilder vorzugsweise aus elastischem Material gefertigt, so daß sie ebenfalls zurückfedern.

Mit Hilfe des lösbar aufsetzbaren Rahmens 22 kann das für Bedienverkauf vorgesehene Tastenfeld 3 mühelos so umgestaltet werden, daß es für Selbstbedienverkauf geeignet ist. Bei Niederdrücken des über einer Taste 4 befindlichen Betätigungselements 28 wird diese Taste niedergedrückt und der betreffende Grundpreis abgerufen. Aufgrund der auf den Schildern 29 befindlichen Symbole kann der Kunde die betreffende Ware ohne weiteres feststellen. Da die Betätigungselemente 28 mit den Schildern 29 größer, beispielsweise zweimal oder dreimal so groß, wie die Einzeltasten 4 ausgebildet sein können, ist auch ein störungsfreier Betrieb der Tastatur durch Laien gewährleistet.

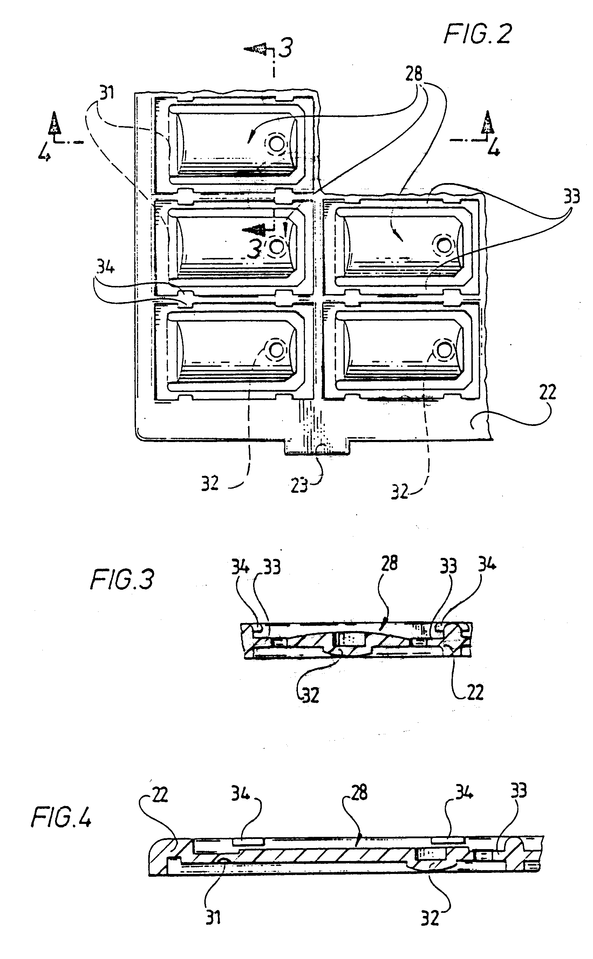

Die Figuren 2 bis 4 zeigen Einzelheiten des Rahmens 22. Die als zungenförmigen Wippen ausgebildeten Betätigungselemente 28 sind an ihrer einen (in Figur 2 jeweils links gelegenen) Seite einstückig mit dem Rahmen 22 verbunden, und zwar über ein rückfederndes Filmscharnier, welches in Figur 2 und 4 mit den Bezugszeichen 31 versehen ist. An der den Einzeltasten 4 zugewandten Unterseite der Betätigungselemente 28 ist ein zur Taste 4 hin abstehender Nocken 32 vorgesehen, der beim Niederdrücken des Betätigungselementes 28 den Druck auf die Einzeltaste überträgt. Der Nocken 32 wird so an der Unterseite des Betätigungselementes 28 angeordnet, daß die gewünschte, darunter liegende Einzeltaste sicher betätigt wird. Die Nocken 32 können an den einzelnen Betätigungselementen 28 an jeweils verschiedenen Stellen angebracht werden, wie es der Position der zu betätigenden Einzeltaste entspricht. Hierdurch kann insbesondere unterschiedlichen Rasterungen des Tastenfeldes 3 und des Rahmens 22 Rechnung getragen werden.

Die über den Betätigungselementen 28 angeordneten Schilder 29 sind vorzugsweise als auswechselbare Einlegeschilder ausgebildet, die lösbar in den Randbereich eines Feldes 27 des Rahmens 22 eingesteckt werden können. Hierzu weisen die einzelnen Felder 27 - vergleiche insbesondere Figur 3 - einen umlaufenden Steg 33 auf, auf den die Einlegeschilder 29 aufgelegt werden. Vorstehende Nasen 34, die insbesondere in den Eckbereichen der Felder 27 angeordnet sind, stehen über die Einlegeschilder vor und halten diese fest.

Wie ebenfalls in Figur 3 dargestellt, ist die obere, den Einzeltasten 4 abgekehrte Seite der Betätigungselemente 28 leicht nach oben konvex gewölbt. Durch diese Wölbung wird ein darüber befindliches Einlegeschild ebenfalls leicht nach oben ausgewölbt und hierdurch etwas vorgespannt, so daß hierdurch die Betätigungskraft der betreffenden Einzeltaste 4 etwas vermindert ist.

Wenn die mit dem Rahmen 22 versehene, für Selbstbedienverkauf vorgesehene Waage wieder auf Bedienverkauf umgestellt werden soll, wird der aufgesteckte Rahmen 22 abgenommen. Der Rahmen 22 kann mit der Trägerplatte 21 des Tastenfeldes 3 fest verriegelt werden, so daß er dieses Tastenfeld gleichzeitig vor einem unbefugten Zugang, beispielsweise vor einer unbefugten Änderung der Programmierung, schützt.

Wenn die Einlegeschilder 27 als auswechselbare Einlegeschilder ausgebildet sind, können sie ohne großen Aufwand ausgetauscht werden, so daß der Rahmen 22 in einfacher Weise auf andere Waren umgestellt werden kann.

## Patentansprüche

1. Tastatur für preisrechnende, einen Abrufspeicher aufweisende Ladenwaage mit einem ortsfesten, aus mehreren Einzeltasten (4) bestehenden Tastenfeld (3), wobei am ortsfesten Tastenfeld (3) abnehmbar ein beweglicher Rahmen (22) mit mehreren Betätigungselementen (28) angeordnet ist, die Betätigungselemente (28) mit an den Einzeltasten (4) angreifende Nocken (32) versehen sind, und die Betätigungselemente (28) des Rahmens (22) mit den Einzeltasten (4) des Tastenfeldes (3) so ausgerichtet sind, daß jeweils ein Betätigungselement über wenigstens einer Einzeltaste liegt und diese Einzeltaste durch das Betätigungselement betätigbar ist,
**dadurch gekennzeichnet, daß**
ein Betätigungselement (28) mehrere Einzeltasten (4) des Tastenfeldes (3) überdeckt, und die an diesen Betätigungselementen vorgesehenen Nocken (32) zur Betätigung einer Einzeltaste (4) der unter jedem Betätigungselement liegenden, mehreren Einzeltasten (4) dienen.

2. Tastatur nach Anspruch 1, dadurch gekennzeichnet, daß die Einzeltasten (4) des ortsfesten Tastenfeldes (3) als Folientasten ausgebildet sind.

3. Tastatur nach Anspruch 1, dadurch gekennzeichnet, daß der Rahmen (22) schwenkbar am Tastenfeld (3, 21) angeordnet ist.

4. Tastatur nach Anspruch 1, dadurch gekennzeichnet, daß der Rahmen (22) auf das Tastenfeld (3, 21) aufsteckbar ist.

5. Tastatur nach Anspruch 1, dadurch gekennzeichnet, daß der Rahmen (22) sowohl schwenkbar als auch aufsteckbar am Tastenfeld (3, 21) befestigt ist.

6. Tastatur nach Anspruch 1, dadurch gekennzeichnet, daß die Betätigungselemente (28) als Wippen ausgebildet sind.

7. Tastatur nach Anspruch 1, dadurch gekennzeichnet, daß die Betätigungselemente (28) rückfedernd ausgebildet sind.

8. Tastatur nach Anspruch 6, dadurch gekennzeichnet, daß die Wippen durch Filmscharniere (31) am Rahmen (22) befestigt sind.

9. Tastatur nach Anspruch 6, dadurch gekennzeichnet, daß die Oberseite der Wippe konvex gewölbt ist.

10. Tastatur nach Anspruch 1, dadurch gekennzeichnet, daß über den Betätigungselementen (28) auswechselbare Einlegeschilder (29) angeordnet sind.

11. Tastatur nach Anspruch 1, dadurch gekennzeichnet, daß der Rahmen (22) als Kunststoffteil ausgebildet ist.

## Claims

1. A keyboard unit for price-calculating shop scales with a recall memory, having a fixed keyboard (3) comprising a plurality of individual keys (4), a displaceable frame (22) with a plurality of actuating members (28) being arranged in a removable manner on the fixed keyboard (3), the actuating members (28) being provided with cams (32) engaging against the individual keys (4), and the actuating members (28) on the frame (22) being aligned with the individual keys (4) of the keyboard (3) in such a manner that a respective actuating member is positioned above at least one individual key, and the said individual key can be actuated by means of the actuation member, **characterised in that** an actuating member (28) covers a plurality of individual keys (4) on the keyboard (3), and the cams (32) provided on the said actuation members actuate one individual key (4) of the plurality of individual keys (4) positioned beneath each actuating member.

2. A keyboard unit in accordance with claim 1, **characterised in that** the individual keys (4) of the fixed keyboard (3) are formed as membrane keys.

3. A keyboard unit in accordance with claim 1, **characterised in that** the frame (22) is pivotably arranged on the keyboard (3, 21).

4. A keyboard unit in accordance with claim 1, **characterised in that** the frame (22) can be positioned on the keyboard (3, 21) in a plug-in manner.

5. A keyboard unit in accordance with claim 1, **characterised in that** the frame (22) is secured on the keyboard (3, 21) in both a pivotable and a plug-in manner.

6. A keyboard unit in accordance with claim 1, **characterised in that** the actuation members (28) are formed as rockers.

7. A keyboard unit in accordance with claim 1, **characterised in that** the actuation members (28) are formed to be resilient.

8. A keyboard unit in accordance with claim 6, **characterised in that** the rockers are secured to the frame (22) via film hinges (31).

9. A keyboard in accordance with claim 6, **characterised in that** the upper surface of the rockers is curved so as to be convex.

10. A keyboard unit in accordance with claim 1, **characterised in that** exchangeable insertable labels (29) are arranged over the actuation members (28).

11. A keyboard unit in accordance with claim 1, **characterised in that** the frame (22) is formed as a plastic part.

## Revendications

1. Clavier pour une balance de magasin calculant des prix et comprenant une mémoire interrogeable, comportant un panneau de touches (3) fixe, constitué de plusieurs touches individuelles (4), un cadre mobile (22) pourvu de plusieurs éléments d'actionnement (28) étant disposé de manière amovible sur le panneau de touches fixe (3), les éléments d'actionnement (28) étant dotés de bossages (32) agissant sur les touches individuelles (4), et les éléments d'actionnement (28) du cadre (22) étant alignés avec les touches individuelles (4) du panneau de touches (3) de telle sorte que chaque élément d'actionnement se trouve au-dessus d'au moins une touche individuelle et que cette touche individuelle peut être actionnée par l'élément d'actionnement, caractérisé en ce qu'un élément d'actionnement (28) recouvre plusieurs touches individuelles (4) du panneau de touches (3), et les bossages (32) prévus sur ces éléments d'actionnement servent à actionner une touche individuelle (4) parmi la pluralité des touches individuelles (4) qui se trouvent sous chaque élément d'actionnement.

2. Clavier selon la revendication 1, caractérisé en ce que les touches individuelles (4) du panneau de touches fixe (3) sont réalisées sous forme de touches à effleurement.

3. Clavier selon la revendication 1, caractérisé en ce que le cadre (22) est disposé à pivotement sur le panneau de touches (3, 21).

4. Clavier selon la revendication 1, caractérisé en ce que le cadre (22) peut être enclenché sur le panneau de touches (3, 21).

5. Clavier selon la revendication 1, caractérisé en ce que le cadre (22) est fixé à la fois à pivotement et à enclenchement sur le panneau de touches (3, 21).

6. Clavier selon la revendication 1, caractérisé en ce que les éléments d'actionnement (28) sont réalisés sous forme de touches basculantes.

7. Clavier selon la revendication 1, caractérisé en ce que les éléments d'actionnement (28) sont réalisés avec un rappel élastique.

8. Clavier selon la revendication 6, caractérisé en ce que les touches basculantes sont fixées par des charnières pelliculaires (31) sur le cadre (22).

9. Clavier selon la revendication 6, caractérisé en ce que le dessus des touches basculantes est bombé avec une forme convexe.

10. Clavier selon la revendication 1, caractérisé en ce que des étiquettes interchangeables (29) sont agencées au-dessus des éléments d'actionnement (28).

11. Clavier selon la revendication 1, caractérisé en ce que le cadre (22) est réalisé sous la forme d'une pièce en matière plastique.
